# EUROPEAN PATENT SPECIFICATION

(11) **EP 3 572 961 B1**
(45) Date of publication and mention of the grant of the patent: **27.04.2022**
(21) Application number: 18382363.2
(22) Date of filing: 25.05.2018
(51) Int. Cl.: G06F 21/31, G06F 21/32, H04L 29/06

(54) **METHOD AND SYSTEM FOR CONTINUOUS VERIFICATION OF USER IDENTITY IN AN ONLINE SERVICE USING MULTI-BIOMETRIC DATA**
VERFAHREN UND SYSTEM ZUR KONTINUIERLICHEN ÜBERPRÜFUNG DER BENUTZERIDENTITÄT IN EINEM ONLINE-DIENST UNTER VERWENDUNG VON MULTIBIOMETRISCHEN DATEN
PROCÉDÉ ET SYSTÈME DE VÉRIFICATION CONTINUE DE L'IDENTITÉ D'UTILISATEUR DANS UN SERVICE EN LIGNE À L'AIDE DE DONNÉES MULTIBIOMÉTRIQUES

(43) Date of publication of application: 27.11.2019
(73) Proprietor: Smiley Owl Tech S.L., 20018 Donostia (San Sebastián) (ES)
(72) Inventor: LABAYEN ESNAOLA, Mikel, 20018 Donostia (Gipuzkoa) (ES); VEA ORTE, Ricardo, 20018 Donostia (Gipuzkoa) (ES); FRAILE YARZA, Manuel, 20018 Donostia (Gipuzkoa) (ES)
(74) Representative: Balder IP Law, S.L.

(56) References cited:
- EP-A1- 2 645 275
- WO-A1-2016/065405
- US-A1- 2013 036 458
- US-A1- 2014 282 868
- US-A1- 2016 127 363

## Description

### TECHNICAL FIELD

The present invention relates to the field of secure access to Internet services and continuous verification during active sessions and, in particular, to methods and systems for avoiding identity theft in online services.

### STATE OF THE ART

Nowadays, identification of users in online services or web services requires remote authentication prior to granting access to sensitive content. For some online services, such as online learning, one-time authentication using user identifier and password is clearly insufficient, as reported for example by Moini A. et al. in "Leveraging Biometrics for User Authentication in Online Learning: A System Perspective", IEEE Systems Journal, Vol. 3, N° 4, December 2009, pages 469-476. This document explores the possibility of using biometric technology to defend against user impersonation attacks by certifying the presence of the user in front of the computer for the entire web service session. This is also suggested by Noguera I. et al. in "Assuring Authorship and Authentication Across the e-Assessment Process", ⒸSpringer International Publishing AG 2017, D. Joosten-ten Brinke and M. Laanpere (Eds.): TEA 2016, CCIS 653, pp. 86-92, 2017.

European patent EP3005639B1 discloses a method for verifying the identity of a user of an online service based on facial recognition, in which photos of the user are repeatedly taken and biometrical parameters of each photo are compared with a reference biometrical model of the supposed user. Manual recognition of the photos can be done in the event of mismatch.

Different biometric technics have been suggested in order to verify the identity of students in online learning. For example, Tsankova R. et al. discloses five technological tools: face recognition, voice recognition, forensic analysis, typing rhythm and plagiarism analysis in "Synergy Effect of the TeSLA Project in Management of Engineering Higher Education", MEDES'17, November 7-10, 2017, Bangkok, Thailand, Copyright 2017 ACM 978-1-4503-4895-9. For example, regarding voice recognition, this document proposes that the student logged in an online learning session is requested to speak out a few sentences several times during the session in order to compare his/her voice with the voice of person that made the enrollment. Methods for identity verification of an online service are for example disclosed in US2013/0036458A1, WO2016/065405A1, EP2645275A1 and US2014/0282868A1.

In spite of the different biometric techniques identified as contributing to certifying the presence of the authentic user during a web service session, there is a need to efficiently prevent identity theft when using web services sessions of certain duration, without distracting the user from the activity he/she is performing in connection with the web service.

### DESCRIPTION OF THE INVENTION

It is an object of the present invention to provide a method and system for secure access to web services and secure continuous use of web services sessions, in which the identity of the user is continuously verified along the online session.

The method and system of the present disclosure represent a value-added service addressed to entities which offer on-line services and require user authentication. The method provides an improved solution to the identity theft in the on-line world since it provides continuous verification of the identity of persons who use a web service by means of a combination of several biometric techniques. The verification is based on facial recognition plus at least one additional biometric technique, such as voice recognition and/or keystroke recognition. The verification is achieved by repeatedly taking pictures of the user with a webcam and comparing those pictures with a reference picture of the subscribed user. Other biometric technics, such as voice recognition and/or keystroke pattern recognition may be used for increasing certainty. For example, voice detection and/or keystroke pattern detection may be used in order to trigger the capture of a new picture. Or voice detection and/or keystroke pattern detection may be used only when facial recognition does not provide certainty above a certain threshold. Or voice detection and/or keystroke pattern detection may always be used in combination with the facial recognition techniques, contributing to the establishment of a certainty threshold. The method and system are explained in detail next.

In the context of the present disclosure, the terms "picture", "image" and "photo" are interchangeably used. The same applies to the expressions "web service" and "online service", which equally refer to remote services the access of which requires an Internet connection (or, in general, an unsecured connection).

Also in the context of the present disclosure, the term "continuous", referred to in "continuous validation" or "continuous verification" of a session (of an online service), means that the identity of the user who is using said session is verified not only at the moment of giving access to the user, that is to say, when the session starts, but also at several different moments along the active session. This repeated verification can be either periodical (with the periodicity which the service provider decides to impose) or random (with the advantage of surprising the user). In other words, "samples" of the user are taken at discrete moments during the session for continuously verifying his/her identity. Depending on the different biometric techniques that may be used, the samples may be photos, sound, such as speech, or keystroke (typing rhythm).

The method and system of the present disclosure combines different biometric technologies to defend against user impersonation attacks by certifying the presence of the user in front of the computer for the entire web service session. Apart from using a user identifier, such as user ID, provided at the beginning of the online session, facial recognition and one or more other biometric techniques are used. The biometric techniques, including facial recognition, are preferably used in a passive way, that is to say, without interrupting the user from performing the activity associated to the service provided online.

At the beginning of the online session, samples of different biometric techniques are taken. This way, at least one picture of the user is taken. The at least one picture is taken with the webcam of the computer in front of which the user is and with which the user is being logged in the online service. Besides, the user may be requested to speak out or read a brief text in order to capture a voice sample, also referred to as voice clip in this text. The user may also be requested to type some words or sentences in order to extract a keystroke pattern.

With the webcam of the computer, the system and method may repeatedly -either periodically or randomly- take photos of the person placed in front of the computer or may continuously register video of the person, and check whether the person of the photo or video is the person of a reference photo/video. The reference photo/video may be a reference photo/video obtained by the system at the beginning of the online session; or may be a reference photo/video previously stored and associated to the user ID of the person currently using the online service; or may be the last authorized photo/video captured by the system.

If, during the online session, the last captured photo unequivocally corresponds to the reference photo, the system may disregard any other biometric technique, such as voice and/or keystroke analysis.

Alternatively, even if the last captured photo unequivocally corresponds to the reference photo, the system may double check the identity of the user with additional biometric analysis, such as voice and/or keystroke analysis.

For example, while an online session is active and photos of the user are repeatedly captured, every time voice is detected with the microphone of the user terminal, a new photo is captured in order to update the verification process. Or, every time voice is detected with the microphone of the user terminal, the system may verify whether the detected voice is the same voice as the voice of the person registered at the beginning of the online session. Or, the detected voice may only be analyzed in the event that the last photo/video does not permit to unequivocally identify the person in the last picture with the person in a reference photo/video.

Besides, while an online session is active and photos of the user are repeatedly captured, in addition to the voice analysis or instead thereof, the system may check, either periodically or randomly, the keystroke profile of the user currently typing, by comparing it with a reference keystroke profile provided at the beginning of the online session.

If, during the online session, either the recorded voice or the keystroke profile does not match the respective reference model, the system may immediately take a new photo of the person in front of the computer in order to verify the identity of the person in front of the computer.

If, by means of analysis of biometric techniques, the method and system are unable to unequivocally match the person using the computer with an authorized person, manual validation may be used, for manually validating a photo captured during the online session with one or more reference photos. Manual validation may also be used for manually validating an audio clip captured during the online session with one or more reference audio clips.

According to an aspect of the present invention, there is provided a method for verifying the identity of a user of an online service, comprising: when a user is connected to an online service from a user terminal comprising a webcam and a microphone, establishing a connection between the user terminal and a biometric data collecting module; downloading from the biometric data collecting module at least one application for taking photos with the webcam of the user terminal and one application for capturing audio with the microphone of the user terminal; while a session with the online service is active: taking a photo with the webcam of the user terminal, said taking a photo being controlled by the application for taking photos; sending each photo taken and associated metadata to a management module, said metadata being at least a user ID of the user using the user terminal and the time of capture of said photo; automatically extracting one set of features per each face which appears in said photo; comparing said set or sets of features extracted from said photo with a biometrical model of a reference photo of the user; repeating the former steps at periodic or non-periodic time intervals, thus continuously verifying the identity of the user connected to the online service through the user terminal; every time sound is detected by the microphone of the user terminal, recording the sound as an audio clip, sending it to the management module, checking whether said sound is voice or not, and if it is voice: extracting therefrom voice features and comparing them with a reference voice model obtained from a reference audio file of the user. If the result of a comparison does not unequivocally match the person in the photo and/or audio clip with the user to which said user ID belongs, either informing the provider of the online service of this or sending the photo and/or audio clip to a manual recognition unit for manual validation.

In embodiments of the invention, the steps of repeatedly taking photos, sending them to the management module and comparing the extracted features with a biometrical model of a reference photo of the user, is done at random time intervals.

In embodiments of the invention, if the detected sound is voice, automatically taking another photo with the webcam of the user terminal, sending it to the management module, extracting one set of features per each face which appears in the photo and comparing the set or sets of features extracted from said photo with a biometrical model of a reference photo of the user.

In embodiments of the invention, the comparison of the set or sets of features extracted from a photo with a biometrical model of a reference photo of the user provides a result which is a variable α whose value gives information for qualifying the result in a certain percentage, wherein 0 ≤ α ≤ 1, and the comparison of the voice features extracted from the recorded voice with a reference voice model obtained from a reference audio file of the user provides a result which is a variable β whose value gives information for qualifying the result in a certain percentage, wherein 0 ≤ β ≤ 1, wherein α + β = 1, wherein 1 represents the best qualified result (100%).

In embodiments of the invention, the method further comprises downloading from the biometric data collecting module an application for capturing keystroke pattern and, every time it is detected that the user at the user terminal is typing on the keyboard of the user terminal, a keystroke pattern is extracted and sent to the management module, the method further comprising comparing the extracted keystroke pattern with a reference keystroke pattern corresponding to the registered user. In this case, in embodiments of the invention, if the result of the checking determines that the keystroke pattern does not correspond to the reference keystroke pattern, a new photo of the user at the user terminal is captured with the webcam of the user terminal and sent to the management module for repeating the verification steps.

In embodiments of the invention, the comparison of the set or sets of features extracted from a photo with a biometrical model of a reference photo of the user provides a result which is a variable α whose value gives information for qualifying the result in a certain percentage, wherein 0 ≤ α ≤ 1, the comparison of the voice features extracted from the recorded voice with a reference voice model obtained from a reference audio file of the user provides a result which is a variable β whose value gives information for qualifying the result in a certain percentage, wherein 0 ≤ β ≤ 1, and the comparison of the extracted keystroke pattern with a reference keystroke pattern provides a result which is a variable ρ whose value gives information for qualifying the result in a certain percentage, wherein 0 ≤ ρ ≤ 1, and wherein α + β + ρ = 1, wherein 1 represents the best qualified result (100%).

In embodiments of the invention, the user ID of the user using the user terminal which is sent to a management module together with each photo and/or audio clip, is provided by the user terminal which in turn has obtained it from the online service provider.

In embodiments of the invention, the one or more applications downloaded at the user terminal from the biometric data collecting module are portable applications executed at the user terminal without being installed therein.

In embodiments of the invention, if a photo or an audio clip is taken to a manual recognition module for manual validation, the manual recognition module is accessed by a human validator from a remote terminal.

In embodiments of the invention, if the user has not been registered as a user of the online service yet, prior to downloading from the biometric data collecting module at least one application for taking photos: the method comprises: downloading from the biometric data collecting module to the user terminal an application for registration at a biometrics controlled session, said application managing the capture of at least one first photo with the webcam of the user terminal, the recording of an audio file with the voice of the user and optionally the extraction of a keystroke pattern of the user typing on the keyboard of the user terminal; and storing the at least one first photo, audio file and optionally keystroke pattern.

In a second aspect of the present invention, it is provided a system for verifying the identity of a user of an online service, comprising: an biometric data collecting module configured for providing a user terminal through which a user can be connected to an online service, with at least one application for taking photos with the webcam of the user terminal and at least one application for capturing audio with the microphone of the user terminal; a management module configured for receiving photos and associated metadata taken with said webcam at the request of the application for taking photos, and for receiving audio clips recorded at the request of the application for capturing audio, said metadata comprising a user ID of the user of the user terminal; a data base for storing said photos, audio clips and associated metadata, and at least one reference photo and reference audio file of the registered user of said online service; an automatic face recognition module configured for extracting one set of features per each face which appears in the photos and for comparing said set or sets of features with a reference biometrical model extracted from the reference photo of the user to which said user ID belongs; an automatic voice recognition module configured for analyzing whether the audio clip captured with the microphone of the user terminal is voice and, if it is determined that it is voice, for extracting voice features from the audio clip and comparing them with a reference voice model obtained from a reference audio file of the user; a manual validation module for validating photos and audio clips in the event the automatic comparison is not capable of unequivocally matching the person in the photo or audio clip with an authorized person.

In embodiments of the invention, the biometric data collecting module is further configured for providing an application for extracting keystroke pattern, the system further comprising an automatic keystroke pattern recognition module for comparing the extracted keystroke pattern with a reference keystroke pattern of the registered user.

In embodiments of the invention, the biometric data collecting module, the management module, the data base, the automatic face recognition module, the automatic voice recognition module and the manual recognition module are in the cloud.

In embodiments of the invention, the management module is also configured for, if the result of said comparison unequivocally matches the person in the photo or audio clip with the user to which said user ID belongs, adding to the result a flag indicating that no manual validation is needed, and for, if the result of said comparison does not unequivocally match the person in the photo or audio clip with the user to which said user ID belongs, adding to the result a flag indicating that manual validation is needed.

In a third aspect of the invention, it is provided a computer program product comprising computer program instructions/code for performing the described method.

In a fourth aspect of the invention, it is provided a computer-readable memory/medium that stores program instructions/code for performing the described method.

According to a fifth aspect of the present invention, there is provided a method for verifying the identity of a user of an online service, comprising: when a user is connected to an online service from a user terminal comprising a webcam and a microphone, establishing a connection between the user terminal and a biometric data collecting module; downloading from the biometric data collecting module at least one application for taking photos with the webcam of the user terminal and one application for capturing keystroke pattern with the user terminal; while a session with the online service is active: taking a photo with the webcam of the user terminal, said taking a photo being controlled by the application for taking photos; sending each photo taken and associated metadata to a management module, said metadata being at least a user ID of the user using the user terminal and the time of capture of said photo; automatically extracting one set of features per each face which appears in said photo; comparing said set or sets of features extracted from said photo with a biometrical model of a reference photo of the user; repeating the former steps at periodic or non-periodic time intervals, thus continuously verifying the identity of the user connected to the online service through the user terminal; if the result of a comparison does not unequivocally match the person in the photo with the user to which said user ID belongs, either informing the provider of the online service of this or sending the photo to a manual recognition module for manual validation of the photo; every time it is detected that the user at the user terminal is typing on the keyboard of the user terminal, a keystroke pattern is extracted and sent to the management module, the method further comprising comparing the extracted keystroke pattern with a reference keystroke pattern corresponding to the registered user and, if the result of the checking determines that the keystroke pattern does not correspond to the reference keystroke pattern, a new photo of the user at the user terminal is captured with the webcam of the user terminal and sent to the management module for repeating the verification steps.

In embodiments of the invention, the steps of repeatedly taking photos, sending them to the management module and comparing the extracted features with a biometrical model of a reference photo of the user, are done at random time intervals.

In embodiments of the invention, the method further comprises downloading from the biometric data collecting module an application for capturing audio with the microphone of the user terminal and, every time sound is detected by the microphone of the user terminal, recording the sound as an audio clip, sending it to the management module, checking whether said sound is voice or not, and if it is voice, extracting therefrom voice features and comparing them with a reference voice model obtained from a reference audio file of the user, and, if the result of the comparison between the voice features and the reference voice model does not unequivocally match the recorded voice with the voice of the user to which the user ID belongs, either informing the provider of the online service of this or sending the audio clip to a manual recognition unit for manual validation of the audio clip.

In embodiments of the invention, the method further comprises, if the detected sound is voice, automatically taking another photo with the webcam of the user terminal and sending it to the management module for repeating the verification steps.

In embodiments of the invention, the comparison of the set or sets of features extracted from a photo with a biometrical model of a reference photo of the user provides a result which is a variable α whose value gives information for qualifying the result in a certain percentage, wherein 0 ≤ α ≤ 1, and the comparison of the extracted keystroke pattern with a reference keystroke pattern provides a result which is a variable p whose value gives information for qualifying the result in a certain percentage, wherein 0 ≤ ρ ≤ 1, and wherein α + ρ = 1, wherein 1 represents the best qualified result (100%).

In embodiments of the invention, the comparison of the set or sets of features extracted from a photo with a biometrical model of a reference photo of the user provides a result which is a variable α whose value gives information for qualifying the result in a certain percentage, wherein 0 ≤ α ≤ 1, the comparison of the extracted keystroke pattern with a reference keystroke pattern provides a result which is a variable p whose value gives information for qualifying the result in a certain percentage, wherein 0 ≤ ρ ≤ 1, and the comparison of the voice features extracted from the recorded voice with a reference voice model obtained from a reference audio file of the user provides a result which is a variable β whose value gives information for qualifying the result in a certain percentage, wherein 0 ≤ β ≤ 1, wherein α + β + ρ = 1, wherein 1 represents the best qualified result (100%).

In embodiments of the invention, the user ID of the user using the user terminal which is sent to a management unit together with each photo and keystroke pattern, is provided by the user terminal which in turn has obtained it from the online service provider.

In embodiments of the invention, the one or more applications downloaded at the user terminal from the biometric data collecting module are portable applications executed at the user terminal without being installed therein.

In embodiments of the invention, if a photo is taken to a manual recognition module for manual validation, the manual recognition module is accessed by a human validator from a remote terminal.

In embodiments of the invention, if the user has not been registered as a user of the online service yet, prior to downloading from the biometric data collecting module at least one application for taking photos: downloading from the biometric data collecting module to the user terminal an application for registration at a biometrics controlled session, said application managing the capture of at least one first photo with the webcam of the user terminal, the extraction of a keystroke pattern of the user typing on the keyboard of the user terminal and optionally the recording of an audio file with the voice of the user; and storing the at least one first photo, keystroke pattern and optionally audio file.

In a sixth aspect of the present invention, it is provided a system for verifying the identity of a user of an online service, comprising: a biometric data collecting module configured for providing a user terminal through which a user can be connected to an online service, with at least one application for taking photos with the webcam of the user terminal and an application for extracting keystroke pattern; a management module configured for receiving photos and associated metadata taken with said webcam at the request of the application for taking photos, and for receiving keystroke patterns extracted at the request of the application for extracting keystroke pattern, said metadata comprising a user ID of the user of the user terminal; a data base for storing said photos, keystroke patterns and associated metadata, and at least one reference photo and reference keystroke pattern of the registered user of said online service; an automatic face recognition module configured for extracting one set of features per each face which appears in the photos and for comparing said set or sets of features with a reference biometrical model extracted from the reference photo of the user to which said user ID belongs; an automatic keystroke pattern recognition module configured for comparing the keystroke pattern captured with the user terminal with a reference keystroke pattern of the user; a manual validation module for validating photos in the event the automatic comparison is not capable of unequivocally matching the person in the photo with an authorized person.

In embodiments of the invention, the biometric data collecting module is further configured for providing an application for capturing audio with the microphone of the user terminal, the system further comprising an automatic audio recognition module for comparing a reference voice biometric model with features extracted from a recorded audio clip.

In embodiments of the invention, the biometric data collecting module, the management module, the data base, the automatic face recognition module, the automatic keystroke recognition module and the manual recognition module are in the cloud.

In embodiments of the invention the management module is also configured for, if the result of said comparison unequivocally matches the person in the photo with the user to which said user ID belongs, adding to the result a flag indicating that no manual validation is needed, and for, if the result of said comparison does not unequivocally match the person in the photo with the user to which said user ID belongs, adding to the result a flag indicating that manual validation is needed.

In a seventh aspect of the invention, it is provided a computer program product comprising computer program instructions/code for performing the described method.

In an eighth aspect of the invention, it is provided a computer-readable memory/medium that stores program instructions/code for performing the described method.

The server of the third party keeps or stores different software modules, such as biometric data collecting module, management module, automatic face recognition module, automatic keystroke pattern recognition module, automatic audio recognition module, facial training module, audio training module and manual validation module, involved in the method of the present disclosure. Each module comprises a set of interrelated algorithms for performing a function. Additional advantages and features of the invention will become apparent from the detail description that follows and will be particularly pointed out in the appended claims.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figure:

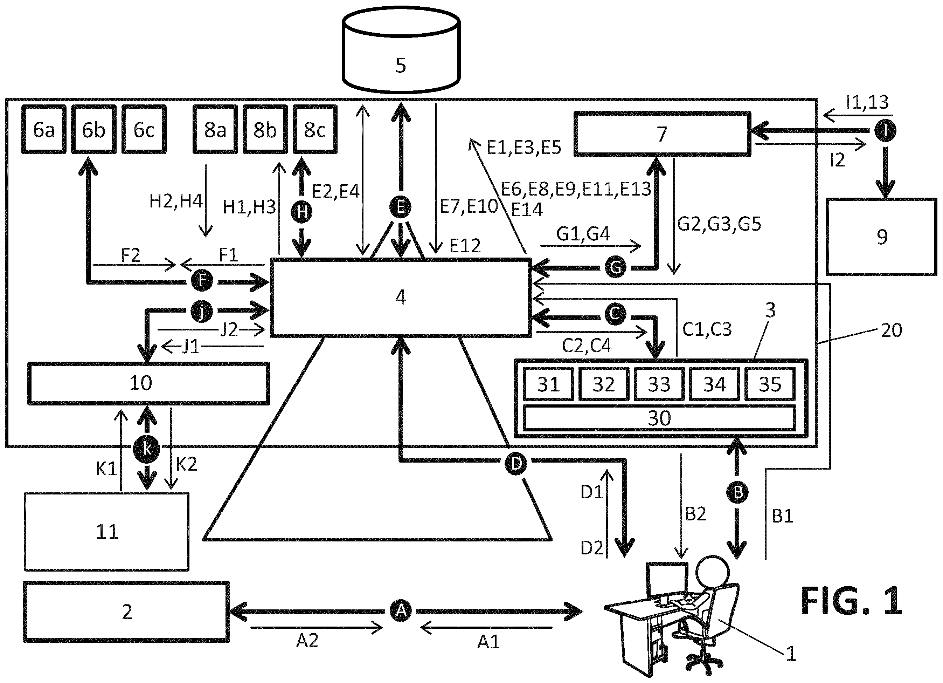

Figure 1 is a work flow of the method according to a possible embodiment of the present invention.

### DESCRIPTION OF A WAY OF CARRYING OUT THE INVENTION

Figure 1 shows a block diagram of a system for verifying the identity of users of a web service according to the present disclosure. The arrows represent a work flow of the method therefor. In figure 1, a user terminal 1, a web site 2 of a service provider and a server or servers 20 of a third-party or third-entity are schematically shown. The third party is the provider of the authentication service of the invention.

The user terminal 1 is the terminal used by a final user in order to access to an online service managed by a service provider. Non-limiting examples of user terminals 1 are personal computers, laptops, cellular or mobile terminals or any other terminal through which a data connection can be established. Any terminal can be used, provided that a data connection can be established. And any conventional browser within said terminal can be used. The inventive method does not impose any software requirements on this user terminal 1 which go beyond the minimal requirements for accessing the web service. This means that the user terminal 1 does not need any plug-in or software component installed. The user terminal 1 has a webcam, a microphone and a keyboard, which must be enabled. The keyboard may be a tactile keyboard or a physical keyboard. Depending of the type of online service, a specific user terminal 1 may be recommended. For example, when the online service is an e-learning service, the user terminal 1 is preferably a personal computer or a laptop. In figure 1, a person using a web service through a connection established with a personal computer is shown.

Block 2 in figure 1 represents an online service, also referred to as web service, offered by a service provider. In particular, this block generally refers to both the server or servers and corresponding web site for providing an online service offered by a service provider. In order for a user to access from a user terminal 1 to the online service offered by the provider, the user needs to visit a web site 2 of the service provider. The service provider typically has, in addition to the web site 2 through which the service is provided, a server that contains, among other things, an order for executing a control application of the third party, preferably executed in the cloud, and information of the location from where user terminals 1 must download applications for user registration and ulterior verification -for example via photo capture, voice recognition or keystroke recognition. Preferably, the location information is an IP address of a biometric data collecting module 3 of server 20 of the third party. The biometric data collecting module 3 provides the user terminal with applications for collecting data required for the verification and authentication service of the present disclosure. Preferably, the servers, databases, and, in general, any processing means and data storage means of this third party are located in the cloud.

The service offered by the service provider through web site 2 may be an educational service in which users follow an online course or training, for which their identity must be frequently checked in order to prevent impersonation attacks. Non-limiting examples of other online services or web services that can also be provided by the service provider are, among others: e-payment, online access to bank accounts, online games and monitoring.

The communication between the user at user terminal 1 and the web service provider via web site 2 in order to receive or use the online service is as follows (stage A in figure 1): A final user -for example, a student enrolled in an online course- visits (arrow A1) using the user terminal 1 a web page 2 from which the provider offers its online service. This connection is established via any conventional data communications protocol, such as the Internet protocol. The user then downloads (arrow A2) the web page 2 and/or online service from the provider's servers. In a preferred embodiment, the user downloads (arrow A2) a web page 2 which acts as user interface. In other words, the web page of the service is downloaded and through interaction with said web page, a site linked to the web page offers its online service (for example, files serving, online exercises, forums...).

The service provider has integrated within its server: (a) information, such as an IP address, for downloading third-party applications and (b) an order to execute a control application 30 from the biometric data collecting module 3 -also referred to as applications module 3 along this disclosure, of the third party or from the cloud, wherein the applications module 3 keeps its information. The service provider also has data which unequivocally identify the user who is connected to a web service, because it obtains this information when the user connects to the online service through a web page or web site 2, which typically requires to log in with user ID and password. When the user terminal 1 requests the third party the downloading of third-party applications, the user terminal 1 may inform about the operative system and web browser it is using, as well as its IP address.

Together with the downloaded web page (arrow A2), the user terminal 1 receives or downloads the order for executing the control application 30 belonging to the biometric data collecting module 3 in a server 20 of the third party. Within this order there are also some data, for example a user ID, which unequivocally identify the user who has logged in the online service through web site 2. The user terminal 1 also receives (arrow A2), together with or within the order of execution, an IP address of the biometric data collecting module 3 of the third-party server 20. The control application 30 is preferably kept in the cloud. The control application 30 controls the downloading of additional third-party applications, that is to say, applications offered by the third party, of the biometric data collecting module 3, also referred to as applications module 3, which are the key to collect data required for user registration and ulterior verification of the user. The ulterior user verification may be periodic or non-periodic. Preferably those applications are kept in the cloud. In other words, the user terminal 1 receives (arrow A2): (a) the IP address at which it can execute a remote, control application 30 and at which it can download third-party applications, (b) an order for executing the remote, control application 30, and (c) data which unequivocally identify the user who has logged in the online service through web site 2. Thus, each user who accesses from a user terminal 1 the online service through web site 2 receives (A2) the order of executing the control application, the information (IP address) to reach the biometric data collecting module 3 and identification of the user of the online service. It can happen, however, that the service provider might not be interested, for any reason, in controlling all the users of its online service. It is therefore the service provider which authorizes or denies authorization to the users for downloading those additional applications from the third party (biometric data collecting module 3). If the service provider decides not to authorize a user to use the verification service provided by the third party, the online session with the online service through web site 2 runs in a conventional way (that is to say, with no continuous verification of the identity of the user).

The intelligence of the third party mainly lies on a management module 4, in charge of, among other tasks, the different applications for capturing samples (photos, audio and/or keystroke pattern), managing the access of images, audio and keystroke patterns to/from data storage means 5 from/to analysis modules, such as one or more data bases; managing the workflow between automatic and manual facial recognition modules, based, for example, on the precision of the automatic facial recognition delivered results; optionally managing the delivery of manually validated images to a facial trainer for continuously updating the facial models of the users; and providing results to clients. In other words, the management module 4 manages all the information flow. The server 20 is comprised of processing means, such as one or more processors, such as, but not limiting, one or more microprocessors and storage means. The server may locate the different software modules involved in the method of this disclosure. Alternatively, at least some of said software modules may be located in one or more other physical entities different from server 20.

As mentioned, the third party also has data storage means 5, such as one or more data bases, for storing data, such as the captured images, associated metadata, optionally biometrical models of user faces, captured audio files, captured keystroke patterns, among others. The storage means 5 may be inside or outside server 20.

Once the user terminal 1 has received (arrow A2) the execution order for executing a control application 30, the user terminal 1 orders (arrow B1) the execution of a control application 30 which belongs to the biometric data collecting module 3 of the third party and is preferably kept in the cloud. The management module 4 orders the downloading of applications to the biometric data collecting module 3. A control application 30 is then executed -preferably in the cloud. The control application 30 is implemented as executable software embedded in processing means preferably located in the cloud. Then, the control application 30 checks whether the user at user terminal 1 trying to access a session of the online service controlled by the authentication service provided by the third party, is allowed to access the session or not. This application 30 checks whether the user is authorized by the service provider or not. As already explained, the service provider might not be interested in controlling all the users of its online service. Authorization for downloading the verification applications is thus denied to the non-authorized users. Finally, if a user is authorized, application 30 checks whether he/she is already registered or not.

Next it is explained how it is checked whether a user is authorized to use different biometric-based verification services or not. Once the control application 30 is executed, the biometric data collecting module 3 is provided with some data unambiguously identifying the user trying to establish the session. A non-limiting example of data for identifying the user is a user ID. This data have been previously obtained (arrow A2) from the service provider, since those data were included in the execution order sent to the user terminal 1 (arrow A2). The biometric data collecting module 3 then makes a petition (arrow C1) to the management module 4 owned by the third party 20, which checks (arrow E1), for example in a data base 5, if the data unambiguously identifying the user, such as a user ID, corresponds to a user who is authorized for using a biometrics-based recognition controlled session or not. Examples of biometrics-based recognition sessions are facial recognition controlled sessions, voice recognition controlled sessions and keystroke recognition controlled sessions. If the user is not allowed, the biometric data collecting module 3 is informed by the management module 4 (arrow C2) and the execution of the control application 30 is interrupted and the user terminal 1 is informed (arrow B2) of this interruption. Additional applications 31-35 are not downloaded. The communication between user at user terminal 1 and web service/servers 2 follows as a conventional client/server connection, without using the method for continuous verification of identity. As already explained, it is the online service provider who authorizes (or not) users in the third party service for identity verification.

Only when a user is authorized by the service provider of the online service 2, a session controlled by the third party starts. The starting is controlled by control application 30. In the controlled session photos are taken and the identity of the persons appearing in the photos is verified by means of facial authentication algorithms, as explained next. Besides, in the controlled session sounds captured by the microphone of the user terminal 1 may be analyzed and, if voice is detected, different actions can be executed. In a possible embodiment, it is analyzed whether the detected voice belongs to the person enrolled in the online service. This is done by applying voice recognition algorithms. In another possible embodiment, if voice is detected, a new photo is taken in order to verify the identity of the person appearing in the photo captured immediately after voice has been detected. Or both things may be done (applying voice recognition algorithms for determining whether the voice belongs to the registered user and taking a new photo when sound is detected). Also, in the controlled session the keystroke pattern of the person typing on the keyboard of the user terminal 1 may be captured and analyzed in order to determine whether the person who is typing is the person enrolled in the online service. This is done by applying keystroke pattern recognition algorithms. Also, a new photo may be taken as a reaction to the analysis of the keystroke patter. The facial authentication algorithms, voice recognition algorithms and keystroke pattern recognition algorithms are out of the scope of the present disclosure.

The biometric data collecting module 3 has additional applications, also referred to as third party applications, usually implemented as executable software located in processing means preferably located in the cloud: a registration application 31, a pictures-taking application 33, an optional audio capturing application 34 and an optional keystroke pattern capturing application 35. Besides, the biometric data collecting module 3 may also keep an application 32 for defining preferences in interaction options between the pictures-taking application 33, audio capturing application 34 and/or keystroke pattern capturing application 35, and the user terminal 1. The third-party applications 30-35 are compatible with any browser. The control application 30 orders the downloading of these applications 31-35 onto the user terminal 1. The user needs applications 31, 33-35 because they enable the user terminal 1 to establish a connection with respective biometrics-based recognition controlled sessions offered by the third party: a facial recognition controlled session and at least one of a voice recognition controlled session and a keystroke recognition controlled session.

By executing the registration application 31, typically at the beginning of the online session, samples of the different biometric techniques (photos and at least one of voice and keystroke pattern) are taken. For example, at least one first photo of the person at the user terminal 1 is taken with the webcam of the user terminal 1 in front of which the person is and with which the user is being logged in the online service. Depending on the application, several photos may be taken, such as 3 photos. The one or more photos taken when the registration application 31 is executed are stored for later comparison with other photos taken along the online session. In other words, they permit to have a reference of the actual appearance of the user. Also by executing the registration application 31, the person at the user terminal 1 may be requested to speak out or read a brief text. The person's voice (for example an audio clip) is then captured by the microphone of the user terminal 1 and stored for later comparison with other audio recordings (audio clips) registered along the online session. Besides, the user may be requested to type some words or sentences on the keyboard of the user terminal 1. A keystroke pattern is extracted therefrom and stored for later comparison with other keystroke samples taken along the online session. The samples (photos, audio clips and/or keystroke pattern) are sent to the management module 4, from which they are resent to other modules and to storage means 5.

The pictures-taking application 33 is an application for accessing to the webcam of the user terminal 1 for identity verification of the user. It enables the establishment of a facial recognition controlled session. It asks the webcam to take a picture and send it to the management module 4. The audio capturing application 34 is an optional application for registering any sound captured by the microphone of the user terminal 1. It enables the establishment of a voice recognition controlled session. It asks a sound recorder located in or connected to the user terminal 1 to register any sound captured by the microphone and send it to the management module 4. The microphone on the user terminal 1 must preferably be constantly switched on. In the voice recognition controlled session it is monitored whether the voice registered for the last time (in the last captured audio clip) is the same as the voice of the person that made the enrollment and/or the voice of the person captured at the registration application 31. The keystroke pattern capturing application 35 is an optional application for extracting a keystroke pattern from the user's typing and sends it to the management module 4. It enables the establishment of a keystroke recognition controlled session. If a preferences application 32 is used, it allows the user to define his/her preferences with respect to the biometric-based applications 33-35. Prior to establishing these controlled sessions, control application 30 checks, through management module 4, which in turn checks in the data base 5, whether the user who has logged in the online service 2 is enabled to use the corresponding biometric-based controlled session. Only if the user is authorized to use the corresponding controlled session does the control application 30 order the download of those applications 31-35, or the one required at a certain moment.

These applications 31-35 may not be downloaded at the user terminal 1 at the same time. Control application 30 controls which application 31-35 must be downloaded (arrow B2) into user terminal 1. For example, if a user is already registered, registration application 31 does not need to be downloaded, because this application 31 is usually downloaded only the first time a user accesses to the verification service provided by the third party 20. The pictures-taking application 33, audio capturing application 34 and keystroke pattern capturing application 35 are downloaded in every session in which the corresponding biometrical parameter is analyzed. The preferences application 32, if used, may be downloaded after a user has been registered. Later on, this application 32 may be only downloaded on demand, when the user clicks in a tab to change the different options. The applications 31-35 are executed locally, but nothing is installed. They are executed without being installed. They are portable applications. The applications are preferably stored in the cloud.

If the management module 4 verifies (arrow E1) that the user is allowed -authorized by the service provider of the online service- to use the facial recognition controlled session, and the user terminal 1 has a webcam which is activated, the biometric data collecting module 3 asks (arrow C3) the management module 4 whether the user is registered or not in the system, that is to say, if the system has already a picture -a face picture- of the user, and at least one of a recording (audio clip) of his/her voice and a keystroke pattern, in its data base 5. After checking this information in data base 5 (arrow E2), the management module 4 informs (arrow C4) the biometric data collecting module 3. All this information work flow is controlled by control application 30. According to the results, the work flow continues as follows:

### Case 1: The user is not registered yet

If the user is not registered yet with the third-party in charge of verifying that secure access to the web service through web site 2 occurs, the control application 30 gives an order for downloading (arrow B2) at user terminal 1 the registration application 31. This internal registration application 31 may be based on Flex technology of Adobe. The registration application 31 is a proprietary development of the patent inventors.

Next, if a user is authorized by the service provider to use the verification service offered by the third party, registration application 31 checks whether the user has, at its user terminal 1, a webcam. If the user does not have a webcam, then the execution of the application 30 is interrupted and registration application 31 removed from user terminal 1 as if the user was not authorized to user the verification service provided by the third party. The additional applications are not downloaded. In that case, the online session with the online service 2 runs in a conventional way (that is to say, with no continuous verification of the identity of the user).

If the user terminal 1 has a webcam, every time a session is initiated, the user is preferably asked to activate the webcam. If a voice recognition controlled session is going to be established, the user is asked to switch on the microphone of the user terminal 1. If the user refuses to activate the webcam, the registration application 31 is removed and the execution of control application 30, preferably in the cloud, is interrupted as if the user was not authorized to user the verification service provided by the third party. The online session with the online service accessed through web site 2 runs in a conventional way, that is to say, with no continuous verification of the identity of the user.

This registration application 31 allows accessing to the webcam of the user terminal 1. The webcam is then ordered to take at least one image of the person sitting at the user terminal 1. If a voice recognition controlled session is going to be used for user verification, the person at the user terminal 1 may also requested to speak out or read a brief text. If a keystroke recognition controlled session is going to be used for user verification, the person may also be requested to type some words or sentences on the keyboard of the user terminal 1. After the user accepts the terms and conditions of use, the at least one image and at least one of voice recording (audio clip) and keystroke pattern, are sent together with, or associated to, those data unambiguously identifying the user trying to establish the session to the management module 4 (arrow D1). Those data unambiguously identifying the user are preferably a user ID. In a preferred embodiment, the webcam takes and sends more than one image. In a more preferred way, it takes and sends three images. As already explained, the data unambiguously identifying the user which is using the session (preferably a user ID) is provided to user terminal 1 (arrow A2) within the order to execute the control application 30. This way the control application 30 knows -through user terminal 1- those data, preferably a user ID, unambiguously identifying the user which is using the session. The user terminal 1 sends them (arrow D1) to the management module 4 together with the photo(s) and at least one of audio clip and keystroke pattern, , and associated metadata. As already mentioned, the data, preferably user ID, corresponds to the user who has logged on the online service through web site 2 with his/her user identifier and password. It is the data of the user who should appear in the photos if no identity theft occurs.

Once registered, that is to say, once the third party has at least one picture of the face and at least one of a voice recording (audio clip) and keystroke pattern of the user of the web service 2, the user can change his/her registration photos whenever he/she wants, but he/she is not obliged thereto. It is recalled that a user can be authorized by the service provider of the online service 2 to use the facial (and audio or keystroke pattern) verification service provided by the third party, but not registered yet to that verification service, because he/she has not connected yet for the first time to the online service 2 offered by the service provider.

The at least one image and at least one of voice recording (audio clip) and keystroke pattern are stored (arrow E3) in the data base 5 with their associated metadata, such as data unambiguously identifying the user, such as user ID, and date/time of capture. The registration process may then be finished. Optionally, a biometrical model may be created at a facial training module 8a from the photo(s) captured during the registration stage. Also optionally, a biometrical model may be created at a voice training module 8b from the audio clip captured -if any- during the registration stage. Also optionally, a biometrical model may be created at a keystroke pattern training module 8c from the keystroke pattern captured during the registration stage if a keystroke pattern has been captured. This may be done as follows (explained for the creation of a face biometrical model, but applicable to the creation of a voice biometrical model or a keystroke pattern biometrical model in a similar way):

The management module 4 collects the image(s) (arrow E4) and transmits (H1) it/them to a facial training module 8a. The facial training module 8a comprises an automatic facial recognition training algorithm, which is out of the scope of the present invention. It creates a biometrical model of each registered user (in particular, of his/her face) from the registration images. The facial training module 8a is also capable of updating the biometrical models from more recently received images of the users. The facial training module 8a analyzes the image(s) and creates a biometrical model of the user from the registered image(s). If the facial training module 8a detects that in the photo (s) taken at the registration process (controlled by application 31) there are more than one faces, the registration is invalid and the webcam of the user terminal 1 is ordered to take new photos until one photo allows for correct registration (until a photo comprises one single face). The facial training module 8a sends (arrow H2) the management module 4 the created biometrical model, which is then taken (arrow E5) to the data base 5 and stored there, finishing the registration process.

Optionally, once the registration process is fulfilled, the biometric data collecting module 3 may load at the user terminal 1 an internal application 32 for defining preferences in interaction options between applications 33-35 and the user terminal 1.

Once the user defines its options, they are stored in the data base 5 through management module 4 (arrow D2 from user terminal 1 to management module 4 and arrow E14 from management module 4 to data base 5).

Finally, the biometric data collecting module 3 loads the required biometric-based applications (pictures-taking application 33 and at least one of audio capturing application 34 and keystroke pattern capturing application 35), which are preferably loaded during all coming sessions. The pictures-taking application 33 may either take photos randomly or periodically. Besides it may either inform the user that a photo is going to be taken or not. For example, it may inform the user with a blinking light or a sound. In embodiments of the invention, the voice recognition application 34 records only when sound is captured by the microphone. In embodiments of the invention, the voice recognition application 34 continuously records any sound that may be captured by the microphone of the user terminal 1 or records periodically or randomly. Besides, the pictures-taking application 33 may be programmed to take a new photo every time sound is detected by the microphone. Or the pictures-taking application 33 may be programmed to take a new photo only when the captured sound has been analyzed and it has been concluded that it is voice. In embodiments of the invention, the keystroke pattern capturing application 35 records and extracts a keystroke pattern only when keystroke activity is detected. In embodiments of the invention, the keystroke pattern capturing application 35 analyzes and extracts the typing pattern periodically or randomly. In embodiments of the invention, the pictures-taking application 33 may be programmed to take a new photo when it is determined that the lastly extracted keystroke pattern does not correspond to the registered user. In a possible embodiment, the keystroke pattern capturing application 35 may be associated to the voice recognition application 34, for example programed to analyze and extract the typing pattern every time sound is detected by the microphone.

### Case 2: The user is already registered

If the user is already registered, that is to say, the process described in case 1 has already occurred once, the control application 30 gives an order for downloading (arrow B2) at user terminal 1 the pictures-taking application 33 for taking photos during all coming sessions and at least one of the audio capturing application 34 for capturing sound during all coming sessions and the keystroke pattern capturing application 35 for capturing and extracting keystroke pattern during all coming sessions. These applications 33-35 may be based on Flex technology of Adobe. The patent inventors have produced a proprietary development of these applications 33-35 based on Flex technology of Adobe. The webcam (and microphone, if the audio capturing application 34 is being used) of the user terminal 1 needs to be active.

The pictures-taking application 33 allows accessing to the webcam of the user terminal 1. Either periodically or every now and then, that is to say, randomly around a mean time, this second option being the preferred one in order to prevent the user from getting used to a routine, the webcam is ordered by the pictures-taking application 33 to take one picture of the person sitting at the user terminal 1. Besides, pictures are preferably taken in a passive way, that is to say, without asking or requiring the user to actively do anything: for example, the user is not requested to look at the webcam or to stop doing what he/she is currently doing. It does not matter if some pictures are not valid samples in the sense that they do not enable to recognize a face properly, because pictures are repeatedly taken, some of them being valid pictures. The pictures-taking application 33 then sends the picture together with its associated metadata, such as data unambiguously identifying the user which is using the session (preferably a user ID) and date/time of capture, to the management module 4 (arrow D2). The data, preferably user ID, identifying the user corresponds to the user who has logged on the online service through web site 2 with his/her user identifier and password. It is the data of the user who should appear in the photos, that is to say, if no identity theft occurs. The user terminal 1 sends it (arrow D2) to the management module 4 together with the photo and metadata. The images which are sent randomly or periodically to the management module 4 are then stored (arrow E6) in the data base 5 with the associated metadata. This is managed by the management module 4.

Afterwards, the management module 4 collects the stored image (arrow E7) and transmits (F1) it to an automatic facial recognition module 6a. This module 6a comprises a conventional algorithm for automatic facial recognition, which is out of the scope of the present invention. As a matter of example, the algorithm for automatic facial recognition may be based on deep learning technologies. Other technologies may be used alternatively or in combination. The algorithm compares the features of biometric model with features extracted from a photo. In embodiments of the invention, the algorithm produces a similarity result and a security value or reliability value (percentage). The algorithm is preferably implemented as a computer program executed at the server or at a different physical entity. Its inputs are a biometrical model of a registered user and a captured picture; its outputs may be a similarity result (a variable whose value gives all the information necessary to qualify the result) and a value representing the reliability degree. At the automatic facial recognition module 6a, it is detected if the photo comprises at least one face or not and, if there is at least one, how many of them there are. Once one or more faces are detected, facial characteristics of each face are extracted in order to compare them with a biometrical reference model of the face of the registered user. The features extracted from the image are compared to a reference one.

This may be done by collecting from the data base 5 a reference photo (for example, a photo taken during the registration stage or when the user enrolled for the online service), extracting a reference biometrical model from the reference photo and comparing the reference biometrical model with the biometrical model extracted from the last captured photo. In this case, the reference biometrical model is obtained in real time. In this context, "real time" is understood a time comprised within a time range varying between a lower value Vₘᵢₙ and an upper value Vₘₐₓ. The upper value Vₘₐₓ may be equal to or lower than, for example, 2 minutes, such as equal to or lower than1 minute, or equal to or lower than 30 seconds, or equal to or lower than 10 seconds. According to current technology, the lower value Vₘᵢₙ may be, in a non-limiting way, equal to or higher than 1 µs (microsecond, 10⁻⁶ seconds), such as equal to or higher than 0,1 ms (miliseconds, 10⁻³ seconds), or equal to or higher than 1 ms, or equal to or higher than 50 ms, or equal to or higher than 100 ms.

Alternatively, if a reference biometrical model of the registered user has already been created by a facial training module 8a, the automatic facial recognition module 6a collects from the data base 5 the reference biometrical model of that user. The biometrical model under analysis is thus compared to the reference biometrical model which the system keeps for that user.

In any case, the automatic facial recognition module 6a delivers (arrow F2) a result of the analysis (the analysis being the comparison of descriptors or facial parameters of the image with reference descriptors or parameter model of the user extracted from a reference photo) towards the management module 4 which then sends (arrow E8) the result to the data base 5 where it is stored. The result may be a variable whose value gives all the information necessary to qualify the result and a value representing the reliability degree. The result may include: when there is a single face in a picture, whether or not it corresponds to the registered user; an indication that there are more than one face in the picture; or an indication that there is no face in the picture.

While the online session is active and the pictures-taking application 33 is managing the capture of photos of the person sitting at the user terminal 1 with the webcam of the user terminal 1, and the sending of the captured photos to the management module 4, the audio capturing application 34 for capturing sound may also be active. Thus, in addition to facial recognition, voice recognition may be used in order to optimize the user identity verification process. More certainty in the verification is thus achieved. Voice recognition is preferably used in a passive way, that is to say, without interrupting the user from performing the activity associated to the service provided online.

In embodiments of the invention, while the online session is active and photos of the user are repeatedly taken, every time sound is detected by the microphone of the user terminal 1, the sound is recorded and sent, together with associated metadata, such as data unambiguously identifying the user which is using the session -such as user ID- and date/time of the audio recording, to the management module 4 (arrow D2). This is managed and controlled by the audio capturing application 34. The audio files are then stored (arrow E6) in the data base 5, preferably with the associated metadata. The management module 4 then collects the stored audio file (arrow E7) and transmits (F1) it to an automatic voice recognition module 6b. The voice recognition module 6b comprises a set of algorithms. As a matter of example, the algorithm for automatic voice recognition may be based on deep learning technologies. Other technologies may be used alternatively or in combination. The algorithm compares the features of a biometric model with features extracted from a recorded audio clip. In embodiments of the invention, the algorithm produces a similarity result and a security value or reliability value (percentage or probability). The algorithm is preferably implemented as a computer program executed at the server or at a different physical entity. Its inputs are a biometrical model of the voice of a registered user and a captured audio clip; its outputs may be a similarity result (a variable whose value gives all the information necessary to qualify the result) and a value representing the reliability degree. The result may include: an indication that the sound is music; an indication that the sound is background noise; if the sound is voice, whether or not there is a single voice; and if there is a single voice, whether or not it corresponds to the registered user; or an indication that the voice corresponds to more than one person. The algorithm or set of algorithms checks whether the recorded sound corresponds to voice. If the result of this checking determines that the sound is not voice, but for example noise or music, nothing else may be done and the audio capturing application 34 keeps active, ready to detect new sounds with the microphone of the user terminal 1. If the result of the checking determines that the sound is voice, different actions may be performed.

In a possible implementation, if the result of the checking determines that the sound is voice, a new photo of the person sitting at the user terminal 1 is captured with the webcam of the user terminal 1. This new photo is sent to the management module 4 following the process already explained and compared with a reference photo in order to validate the identity of the user (or for example check whether the user is together with other people, taking on the phone, etc.). In other words, the content of the audio file is not used to directly verify the identity of the user, but to trigger the capturing of a new photo of the person at the user terminal 1.

In another implementation, if the result of the checking determines that the sound is voice, an automatic voice recognition algorithm is applied. First, the algorithm detects whether the identified voice corresponds to one or more persons, and then tries to identify the voice of the registered user among the detected voices. The algorithm extracts voice characteristics or features and compares them with a voice reference model Thus, at the automatic voice recognition module 6b, the extracted voice features are compared to a reference one. This may be done by collecting from the data base 5 a reference audio file or audio clip (for example, an audio file comprising a voice recording taken during the registration stage, for example reading a text in loud voice, or when the user enrolled for the online service), extracting a reference biometrical voice model from the reference audio file and comparing the reference biometrical voice model with the voice features extracted from the last recorded sound (audio file). In this case, the reference biometrical voice model is obtained in real time. Alternatively, if a reference biometrical voice model of the registered user has already been created at the voice training module 8b and previously stored, the automatic voice recognition module 6b collects from the data base 5 the reference biometrical voice model of that user. The voice characteristics under analysis are thus compared to the reference biometrical voice model which the system keeps for that user. The reference biometrical voice model may be updated, for example by training it with new samples (audio clips) that have been registered during the session and have been proved to be correct. The reference model is thus adjusted to biometric changes of the users. The automatic voice recognition module 6b may deliver (arrow F2) a result of the analysis and a security value representing a probability of success, towards the management module 4 which then sends (arrow E8) the result to the data base 5 where it is stored.

In another possible implementation, if the result of the checking determines that the sound is voice, a new photo of the person sitting at the user terminal 1 is captured with the webcam of the user terminal 1. The new photo is sent to the management module 4 following the process already explained and compared with a reference photo in order to validate the identity of the user (or for example check whether the user is together with other people, taking on the phone, etc.). In this case, if the comparison of the current photo with the reference one does not result in correct user authentication, then the content of the audio file is analyzed in detail. For example, the automatic voice recognition algorithm may be used to extract voice features to be compared with a reference biometrical voice model, following some of the stages already described. In other words, in this possible embodiment, the detected voice is only analyzed in the event that the last captured photo does not permit to unequivocally identify the person in the last picture with the person in a reference photo.

While the online session is active and at least the pictures-taking application 33 is managing the capture and sending of photos, keystroke pattern detection may also be used. This is done by executing the keystroke pattern capturing application 35. Keystroke pattern recognition contributes to optimizing the user identity verification process. More certainty in the verification is thus achieved. Keystroke pattern recognition is preferably used in a passive way, that is to say, without interrupting the user from performing the activity associated to the service provided online. The keystroke pattern recognition may be used instead of the audio/voice recognition or in addition thereto.

In embodiments of the invention, while the online session is active and photos of the user are repeatedly taken, every time the person sitting at the user terminal 1 types on the keyboard, the keystroke pattern capturing application 35 extracts the keystroke pattern or profile and sends it, together with associated metadata, such as data unambiguously identifying the user which is using the session -such as user ID- and date/time of the typing, to the management module 4 (arrow D2). In embodiments of the invention, the keystroke pattern capturing application 35 analyzes and extracts the typing pattern periodically or randomly. In embodiments of the invention, if the result of the analysis determines that the keystroke pattern does not correspond to the reference keystroke pattern, a new photo of the person sitting at the user terminal 1 is captured with the webcam of the user terminal 1. This new photo is sent to the management module 4 following the process already explained and compared with a reference photo in order to validate the identity of the user. In embodiments of the invention, the keystroke pattern capturing application 35 may be associated to the voice recognition application 34, for example programed to analyze and extract the typing pattern every time sound is detected by the microphone. The extraction of the keystroke pattern is managed and controlled by the keystroke pattern capturing application 35. The keystroke pattern is then stored (arrow E6) in the data base 5 with the associated metadata. The management module 4 then collects the stored keystroke pattern (arrow E7) and transmits (F1) it to an automatic keystroke recognition module 6c. This is repeated every time someone types with the keyboard of the user terminal 1 during the active session. This module 6c comprises a conventional algorithm for analyzing the recorded keystroke pattern. An automatic keystroke recognition algorithm is applied. As a matter of example, the algorithm for automatic keystroke pattern recognition may be based on deep learning technologies. Other technologies may be used alternatively or in combination. For example, the algorithm compares the features of a keystroke pattern biometric model with features extracted from an extracted keystroke pattern. Its inputs are the keystroke pattern that has just been extracted and a reference keystroke pattern of the registered user. In embodiments of the invention, the algorithm compares the keystroke pattern sent by the keystroke pattern capturing application 35 with a reference keystroke pattern obtained during the registration session. In embodiments of the invention, the algorithm produces a yes/no result and a security value or reliability value (percentage). In other words, the result indicates whether there is a match or a mismatch in the two compared keystroke patterns. The algorithm is preferably implemented as a computer program executed at the server or at a different physical entity. Thus, at the automatic keystroke recognition module 6c, the keystroke pattern extracted/obtained when the person was typing for the last time is compared to a reference one. This may be done by collecting from the data base 5 a reference keystroke pattern (for example, a keystroke pattern obtained during the registration stage when the user was asked to type some sentences, or when the user enrolled for the online service) and comparing the reference keystroke pattern with the recently obtained one. The automatic keystroke recognition module 6c delivers (arrow F2) a binary result of the analysis (match or mismatch) and a security indicator (percentage of correctness in the binary result) towards the management module 4 which then sends (arrow E8) the result to the data base 5 where it is stored.

If, during the online session, the last captured photo unequivocally corresponds to the reference photo, the system may disregard any other biometric technique, such as voice and/or keystroke analysis. Alternatively, even if the last captured photo unequivocally corresponds to the reference photo, the system may double check the identity of the user with additional biometric analysis, such as voice and/or keystroke analysis.

In embodiments of the invention, both facial recognition and voice recognition are used for user identity validation. For example, pictures of the person sitting at the user terminal 1 are repeatedly captured, either periodically or randomly; and sound is recorded and analyzed every time the microphone detects sound. Besides, the two biometric techniques may contribute to determine the authenticity of the user identity. For example, the automatic facial recognition module 6a may provide a result which is a variable α whose value gives information necessary to qualify the result in a certain percentage, and the automatic voice recognition module 6b may provide a result which is a variable β whose value gives information necessary to qualify the result in a certain percentage. The two variables contribute to determine the quality of the result. In other words, α + β = 1, wherein 0 ≤ α ≤ 1 and 0 ≤ β ≤ 1, wherein 1 represents the best qualified result (100%).

In embodiments of the invention, both facial recognition and keystroke recognition are used for user identity validation. For example, pictures of the person sitting at the user terminal 1 are repeatedly captured, either periodically or randomly; and the keystroke pattern is analyzed every time the user types with the keyboard. Besides, the two biometric techniques may contribute to determine the authenticity of the user identity. For example, the automatic facial recognition module 6a may provide a result which is a variable α whose value gives information necessary to qualify the result in a certain percentage, and the automatic keystroke pattern recognition module 6c may provide a result which is a variable p whose value gives information necessary to qualify the result in a certain percentage. The two variables contribute to determine the quality of the result. In other words, α + ρ = 1, wherein 0 ≤ α ≤ 1 and 0 ≤ ρ ≤ 1, wherein 1 represents the best qualified result (100%).

In embodiments of the invention, the three described biometrics-based recognition processes are used: facial recognition, voice recognition and keystroke pattern recognition. For example, pictures of the person sitting at the user terminal 1 are repeatedly captured, either periodically or randomly; sound is recorded and analyzed every time the microphone detects sound; and the keystroke pattern is analyzed every time the user types with the keyboard. Besides, the three biometric techniques may contribute to determine the authenticity of the user identity. For example, the automatic facial recognition module 6a may provide a result which is a variable α whose value gives information necessary to qualify the result in a certain percentage, the automatic voice recognition module 6b may provide a result which is a variable β whose value gives information necessary to qualify the result in a certain percentage and the automatic keystroke recognition module 6c may provide a result which is a variable p whose value gives information necessary to qualify the result in a certain percentage. The three variables contribute to determine the quality of the result. In other words, α + β + ρ = 1, wherein 0 ≤ α ≤ 1, 0 ≤ β ≤ 1 and 0 ≤ ρ ≤ 1, wherein 1 represents the best qualified result (100%).

Besides, if, by means of analysis of biometric techniques, such as facial recognition alone; or facial recognition combined with voice recognition; or facial recognition combined with keystroke pattern recognition; or facial recognition combined with voice recognition and with keystroke pattern recognition; the method and system are unable to unequivocally match the person at the user terminal 1 with an authorized person, manual validation may be used, for manually validating a photo or an audio clip captured during the online session with one or more reference photos. Besides, if the analysis of a picture concludes that there are two persons in the picture, the audio clip(s) may also be manually checked in order to evaluate whether two persons are identified or not.

Turning back to the result of the analysis performed at the automatic facial recognition module 6a, or to the result (parameters α and β; or α, β and ρ) of the combined analysis at different modules 6a-6c, at the management module 4 some ranks with possible values of this variable are established, for example to provide a report to a client. According to these ranks, it can be deduced if no person appears in a photo, if the right person has been detected, if a person who is not the right person has been detected, if there are more than one person in the photo, if the person is the right one but he/she is talking to someone not shown in the photo, and so on. In a particular embodiment, a correctly identified user gives as a result a variable with a positive integer, wherein the closer to 0 is the value of the result variable, the more reliability offers the system In particular, the result is identified as either having 100% precision (total guarantee of correct identification of the user) or non-having 100% precision (uncertainty in the identification of the user). Depending on the delivered result, the work flow continues as follows:
a) If the delivered result belongs to the 100% precision group, the delivered result is considered valid and the management module 4 adds to the result a flag indicating that no manual validation is needed. The result is then stored in the data base 5 (arrow E9). After this, the system goes to stand-by state, waiting for another image to analyze.
b) If the delivered result belongs to the uncertainty results group, the management module 4 adds to the result a flag indicating that manual validation is needed and stores it (arrow E9) in the data base 5. Two possibilities arise at this moment:
   b1) If the image is an image which requires real-time validation (which is something which depends mainly on the type of web service 2 provided by the service provider), then the management module 4 transmits (arrow G1) the image to a manual recognition module 7. This is explained in detail later.
   b2) Otherwise (if the image does not require real-time validation), the system goes to stand-by state, waiting for another image to analyze.

As explained in relation to the variable which provides the result of the facial comparison, the system is capable of determining:
- If the image is valid for analysis (that is to say, it is capable of excluding black images)
- If there is someone in front of the webcam or not
- If there is someone, how many persons there are
- If there are more than one person, if one of them is the person who should be in front of the screen
- If there are more than one person, whether recorded voice corresponds to more than one person
- If there is only one person in the image, if this person is the person who should be.

This determination is out of the scope of the present invention.

Next the case in which an image or an audio clip requires manual validation at a manual recognition module 7 is described. The manual recognition module 7 is a web application for manual face or audio recognition which can be used by the staff of the third party. Thus the staff members can validate the users of the web service and cluster the images/audio clips. It also checks, through management module 4, if the staff is authorized to access to this information.

The management module 4 collects (arrow E10) from the data base 5 and sends (arrow G1) to the manual recognition module 7 the following in respect of a user: manual validation pending images/audio clips, images/audio clips taken at the moment of user registration and at least one last verified image/audio clip. It can additionally send more than one already verified images/audio clips.

The manual recognition module 7 has authorized staff who need to be authorized before starting validating manually. For example, they are registered with ID and password in the data base 5 and they must authenticate themselves in a manual validation application located at the manual recognition module 7 and managed by the management module 4 which collects authentication data from the data base 5. All served images/audio clips to the staff are marked, for example using watermarking techniques. This mark is created according to the staff member in order to identify which person (staff member) downloads which images/audio clips from the data base 5. Undue use of the pictures/audio clips is thus prevented.

The manual authentication of pictures/audio clips can be made either in real time or in non-real time (preferably within a limited period of time since the capture of the image/audio clip). In this last case, tasks are distributed according to the premises of a staff manager.
a) If image/audio clip verification must be done in real time: The image/audio clip is analyzed by the automatic face/voice recognition module 6a, 6b and the management module 4 (which is responsible of determining whether manual verification is needed or not) stores the delivered result in the data base 5. After this, the management module 4 sends the image/audio clip (arrow G1) to the manual recognition module 7. This module 7 activates an instant alert in a staff terminal 9 (preferably in a call center to guarantee the real time response).The staff terminal 9 is a terminal used by the staff to access to the manual validation web application 7 (module 7). The staff member then delivers a result of a validation of the image/audio clip in real time. The result of the manual verification is stored in the data base 5 by the management module 4. In a preferred embodiment, more than one staff members analyses the image/audio clip in order to guarantee correct identification of the user.
b) If image/audio clip verification does not need to be done in real time: The images/audio clips and results of the automatic recognition are stored in the data base 5. The staff responsible for manually verifying the images/audio clips can do it at any time. When the staff accesses (arrow 11) through staff terminal 9 to an application for manual recognition located at the manual recognition module 7, this module 7 requests (arrow G3) the management module 4 a set of manual validation pending images/audio clips. The management module 4 collects (arrow E10) the images/audio clips from the data base 5 and inserts corresponding marks, such as water marks, in them. The management module 4 serves (arrow G4) this information to the staff terminal 9 (arrow 12) using the application for manual recognition.

Using the manual recognition application 7, the staff delivers the manual verification results (arrows I3 G5) to the management module 4 which are stored (arrow E11) in the data base 5. To ensure that all staff members are doing properly their work, the management module 4 serves each image/audio clip to different staff members. This way it compares the delivered results, which must be same. If the results are different, the management module 4, responsible of this check, continues serving images/audio clips until they are validated correctly. It further records in the data base 5 counters which count the number of times an image has been evaluated and by whom. For each staff member and each validation process, the management module 4 updates in the data base 5 a corresponding counter of served images/audio clips and manually validated images/audio clips.

Optionally, if the system includes an automatic face training module 8a, once an image has been (preferably manually, but alternatively only automatically) verified as correct (that is to say, it has been verified that an image corresponds to the user who was originally registered at the web service 2), the management module 4 may take (arrow E12) the verified image from the data base 5 to the automatic face training module 8a (arrow H3) -if there is one. There, a new biometrical model of the registered user is created, based on the recent, verified user images, thus updating the biometrical model created when the user first registered. Afterwards, the resultant biometrical model is stored (arrow H4, E13) in the data base 5 (through management module 4). The same occurs with audio clips if the system includes an automatic voice training module 8b. The same occurs with keystroke patterns if the system includes an automatic keystroke pattern training module 8c.

The third party presents the verification results as required by the service provider 2. The results are organized by a results presentation module 10 owned by the third party. Module 10 transforms the numeric values stored in the data base 5 in graphical representations and tables. The results presentation module 10 of the third party sends the results from the management module 4 to a terminal 11 of the service provider. This terminal 11 is used by the service provider to access to the results presentation web application. This is done either on demand of periodically. In a preferred embodiment, the third party automatically generates periodical reports. These reports are in particular generated by module 10, which takes the required information from the data base 5 through the management module 4. Module 10, preferably either periodically or in response to an alarm which triggers when a certain behavior defined by the online service provider fails, periodically sends the reports to the online service provider. In a particular embodiment, they are sent via email. The access to the results is restricted to authorized providers. For this reason the service provider 2 must be identified, for example by means of ID and password, which are verified in the data base 5 in a similar way as staff members in the manual verification stage. Once authorized via the results presentation module 10, the service provider at terminal 11 requests (arrow K1) the results to the presentation module 10 which in turn collects them (arrow J1) from the management module 4. This collects them from the data base 5 and sends them to the presentation module 10, which delivers the results to the terminal 11 (arrow J2, K2). Preferably it creates graphics, charts and tables which are served for their visualization to the terminal 11 as a dynamic web page.

In a preferred embodiment, all the servers and data bases of the third party are in the cloud. Alternatively, the servers and data bases are local servers and databases.

All communications between the final user (at user terminal 1) and the third party (arrows B and D), between the staff and the third party (arrows I), between the service provider and the third party (arrows K) and between the final user (at user terminal 1) and the service provider (arrows A) are preferably TCP/IP, http and POST protocols. The information transmission in these communications channels is encoded. All the rest communications are intra server, physical cable. All the access petitions from different terminals must be accompanied by corresponding (user, staff or provider) ID for authorization. All the images, both in internal and external communications, are always accompanied by an identification of the user who should appear in the image.

The system thus assures valid results with 100% precision, thanks to the combination of automatic and manual verification modules.

Besides, the system works 24h a day, 365 days a year. Furthermore, it is a multilingual system and accessible from any part of the world, provided access to the Internet is available.

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. - A method for verifying the identity of a user of an online service, comprising:
when a user is connected (A1) to an online service (2) from a user terminal (1) comprising a webcam and a microphone, establishing a connection (B1) between the user terminal (1) and an biometric data collecting module (3);
downloading (B2) from the biometric data collecting module (3) at least one application for taking photos (33) with the webcam of the user terminal (1);
the method being **characterized in that** it further comprises:
downloading (B2) from the biometric data collecting module (3) at least one application for capturing audio (34) with the microphone of the user terminal (1);
while a session with the online service (2) is active:
taking a photo with the webcam of the user terminal (1), said taking a photo being controlled by the application for taking photos (33);
sending (D2) the photo taken and associated metadata to a management module (4), said metadata being at least a user ID of the user using the user terminal (1) and the time of capture of said photo;
automatically extracting one set of features per each face which appears in said photo;
comparing said set or sets of features extracted from said photo with a biometrical model of a reference photo of the user;
repeating the former steps at periodic or non-periodic time intervals, thus continuously verifying the identity of the user connected to the online service (2) through the user terminal (1);
every time sound is detected by the microphone of the user terminal (1), recording the sound as an audio clip, sending it to the management module (4), checking whether said sound is voice or not, and if it is voice: extracting therefrom voice features and comparing them with a reference voice model obtained from a reference audio file of the user,
if the result of any of the two comparisons does not unequivocally match the person in the photo and/or audio clip with the user to which said user ID belongs, either informing the provider of the online service (2) of this or sending (G1) the photo and/or audio clip to a manual recognition unit (7) for manual validation.

2. - The method of claim 1, wherein the steps of repeatedly taking photos, sending them to the management module (4) and comparing the extracted features with a biometrical model of a reference photo of the user, is done at random time intervals.

3. - The method of any preceding claim, further comprising, if the detected sound is voice, automatically taking another photo with the webcam of the user terminal (1), sending (D2) it to the management module (4), extracting one set of features per each face which appears in the photo and comparing the set or sets of features extracted from said photo with a biometrical model of a reference photo of the user.

4. - The method of any preceding claim, wherein the comparison of the set or sets of features extracted from a photo with a biometrical model of a reference photo of the user provides a result which is a variable α whose value gives information for qualifying the result in a certain percentage, wherein 0 ≤ α ≤ 1, and the comparison of the voice features extracted from the recorded voice with a reference voice model obtained from a reference audio file of the user provides a result which is a variable β whose value gives information for qualifying the result in a certain percentage, wherein 0 ≤ β ≤ 1, wherein α + β = 1, wherein 1 represents the best qualified result (100%).

5. - The method of any preceding claim, further comprising downloading (B2) from the biometric data collecting module (3) an application for capturing keystroke pattern (35) and, every time it is detected that the user at the user terminal (1) is typing on the keyboard of the user terminal (1), a keystroke pattern is extracted and sent to the management module (4), the method further comprising comparing the extracted keystroke pattern with a reference keystroke pattern corresponding to the registered user.

6. - The method of claim 5, wherein if the result of the checking determines that the keystroke pattern does not correspond to the reference keystroke pattern, a new photo of the user at the user terminal (1) is captured with the webcam of the user terminal (1) and sent to the management module (4) for repeating the verification steps.

7. - The method of any of claims 5-6, wherein the comparison of the set or sets of features extracted from a photo with a biometrical model of a reference photo of the user provides a result which is a variable α whose value gives information for qualifying the result in a certain percentage, wherein 0 ≤ α ≤ 1, the comparison of the voice features extracted from the recorded voice with a reference voice model obtained from a reference audio file of the user provides a result which is a variable β whose value gives information for qualifying the result in a certain percentage, wherein 0 ≤ β ≤ 1, and the comparison of the extracted keystroke pattern with a reference keystroke pattern provides a result which is a variable p whose value gives information for qualifying the result in a certain percentage, wherein 0 ≤ ρ ≤ 1, and wherein α + β + ρ = 1, wherein 1 represents the best qualified result (100%).

8. - The method of any preceding claim, wherein the one or more applications (33-35) downloaded at the user terminal (1) from the authentication module (3) are portable applications executed at the user terminal (1) without being installed therein.

9. - The method of any preceding claim, wherein, if a photo or an audio clip is taken (G1) to a manual recognition module (7) for manual validation, the manual recognition module (7) is accessed by a human validator from a remote terminal (9).

10. - The method of any preceding claim, wherein if the user has not been registered as a user of the online service (2) yet, prior to downloading from the biometric data collecting module (3) at least one application for taking photos (33):
downloading from the biometric data collecting_module (3) to the user terminal (1) an application (31) for registration at a biometrics controlled session, said application (31) managing the capture of at least one first photo with the webcam of the user terminal (1), the recording of an audio file with the voice of the user and optionally the extraction of a keystroke pattern of the user typing on the keyboard of the user terminal (1); and
storing (E3) the at least one first photo, audio file and optionally keystroke pattern.

11. - A system for verifying the identity of a user of an online service, comprising:
an biometric data collecting module (3) configured for providing a user terminal (1) through which a user can be connected to an online service (2), with at least one application for taking photos (33) with the webcam of the user terminal (1) the system being **characterized in that** the biometric data collecting module (3) is further configured for providing the user terminal (1) through which the user can be connected to the online service (2), with at least one application for capturing audio (34) with the microphone of the user terminal (1) every time sound is detected by the microphone of the user terminal (1) and recording the sound as an audio clip; , the system further comprising:
a management module (4) configured for receiving photos and associated metadata taken with said webcam at the request of the application for taking photos (33), and for receiving audio clips recorded at the request of the application for capturing audio (34), said metadata comprising a user ID of the user of the user terminal (1);
a data base (5) for storing said photos, audio clips and associated metadata, and at least one reference photo and reference audio file of the registered user of said online service (2);
an automatic face recognition module (6a) configured for extracting one set of features per each face which appears in the photos and for comparing said set or sets of features with a reference biometrical model extracted from the reference photo of the user to which said user ID belongs;
an automatic voice recognition module (6b) configured for analyzing whether the audio clip captured with the microphone of the user terminal (1) is voice and, if it is determined that it is voice, for extracting voice features from the audio clip and comparing them with a reference voice model obtained from a reference audio file of the user;
a manual validation module (7) for validating photos and audio clips in the event the automatic comparison is not capable of unequivocally matching the person in the photo or audio clip with an authorized person.

12. - The system of claim 11, wherein the biometric data collecting module (3) is further configured for providing an application for extracting keystroke pattern (35), the system further comprising an automatic keystroke pattern recognition module (6c) for comparing the extracted keystroke pattern with a reference keystroke pattern of the registered user.

13. - The system of any of claims 11-12, wherein the biometric data collecting_module (3), the management module (4), the data base (5), the automatic face recognition module (6a), the automatic voice recognition module (6b) and the manual recognition module (7) are in the cloud.

14. - The system of any of claims 11-13, wherein the management module (4) is also configured for, if the result of said comparison unequivocally matches the person in the photo or audio clip with the user to which said user ID belongs, adding to the result a flag indicating that no manual validation is needed, and for, if the result of said comparison does not unequivocally match the person in the photo or audio clip with the user to which said user ID belongs, adding to the result a flag indicating that manual validation is needed.

15. A computer program product comprising computer program instructions/code or a computer-readable memory/medium that stores program instructions/code, for performing the method according to any of claims 1-10.

## Patentansprüche

1. Verfahren zum Verifizieren der Identität eines Benutzers eines Onlinedienstes, das Folgendes umfasst:
wenn ein Benutzer über ein Benutzerendgerät (1), das eine Webcam und ein Mikrofon umfasst, mit einem Onlinedienst (2) verbunden (A1) ist, Herstellen einer Verbindung (B1) zwischen dem Benutzerendgerät (1) und einem Sammelmodul (3) für biometrische Daten;
Herunterladen (B2) von mindestens einer Anwendung zum Aufnehmen von Fotos (33) mit der Webcam des Benutzerendgeräts (1) vom Sammelmodul (3) für biometrische Daten;
wobei das Verfahren **dadurch gekennzeichnet ist, dass** es ferner Folgendes umfasst:
Herunterladen (B2) von mindestens einer Anwendung zum Erfassen von Audio (34) mit dem Mikrofon des Benutzerendgeräts (1) vom Sammelmodul (3) für biometrische Daten;
während eine Sitzung mit dem Onlinedienst (2) aktiv ist:
Aufnehmen eines Fotos mit der Webcam des Benutzerendgeräts (1), wobei das Aufnehmen eines Fotos von der Anwendung zum Aufnehmen von Fotos (33) gesteuert wird;
Senden (D2) des aufgenommenen Fotos und zugehöriger Metadaten an ein Verwaltungsmodul (4), wobei die Metadaten mindestens eine Benutzer-ID des Benutzers, der das Benutzerendgerät (1) verwendet, und die Zeit der Erfassung des Fotos sind;
automatisches Extrahieren eines Satzes von Merkmalen von jedem Gesicht, das in dem Foto erscheint;
Vergleichen des Satzes oder der Sätze von Merkmalen, die aus dem Foto extrahiert werden, mit einem biometrischen Modell eines Referenzfotos des Benutzers;
Wiederholen der obigen Schritte in regelmäßigen oder nicht regelmäßigen Zeitintervallen, dadurch kontinuierliches Verifizieren der Identität des Benutzers, der über das Benutzerendgerät (1) mit dem Onlinedienst (2) verbunden ist;
jedes Mal, wenn vom Mikrofon des Benutzerendgeräts (1) Geräusche detektiert werden, Aufzeichnen der Geräusche als Audioclip, Senden desselben an das Verwaltungsmodul (4), Prüfen, ob die Geräusche Sprache sind oder nicht, und wenn sie Sprache sind: Extrahieren von Sprachmerkmalen daraus und Vergleichen derselben mit einem Referenzsprachmodell, das aus einer Referenzaudiodatei des Benutzers erhalten wird,
wenn das Ergebnis von einem der zwei Vergleiche die Person auf dem Foto und/oder im Audioclip nicht eindeutig dem Benutzer zuordnet, dem die Benutzer-ID gehört, entweder Informieren des Anbieters des Onlinedienstes (2) hierüber oder Senden (G1) des Fotos und/oder des Audioclips zur manuellen Validierung an eine manuelle Erkennungseinheit (7).

2. Verfahren nach Anspruch 1, wobei die Schritte des wiederholten Aufnehmens von Fotos, des Sendens derselben an das Verwaltungsmodul (4) und des Vergleichens der extrahierten Merkmale mit einem biometrischen Modell eines Referenzfotos des Benutzers in zufälligen Zeitintervallen erfolgen.

3. Verfahren nach einem der vorhergehenden Ansprüche, das ferner, wenn die detektierten Geräusche Sprache sind, das automatische Aufnehmen eines weiteren Fotos mit der Webcam des Benutzerendgeräts (1), das Senden (D2) desselben an das Verwaltungsmodul (4), das Extrahieren eines Satzes von Merkmalen jedes Gesichts, das im Foto erscheint, und das Vergleichen des Satzes oder der Sätze von Merkmalen, die aus dem Foto extrahiert werden, mit einem biometrischen Modell eines Referenzfotos des Benutzers umfasst.

4. Verfahren nach einem der vorhergehenden Ansprüche, wobei der Vergleich des Satzes oder der Sätze von Merkmalen, die aus einem Foto extrahiert werden, mit einem biometrischen Modell eines Referenzfotos des Benutzers ein Ergebnis bereitstellt, das eine Variable α ist, deren Wert Informationen zum Qualifizieren des Ergebnisses zu einem gewissen Prozentsatz vermittelt, wobei 0 ≤ α ≤ 1, und der Vergleich der Sprachmerkmale, die aus der aufgezeichneten Sprache extrahiert werden, mit einem Referenzsprachmodell, das aus einer Referenzaudiodatei des Benutzers erhalten wird, ein Ergebnis bereitstellt, das eine Variable β ist, deren Wert Informationen zum Qualifizieren des Ergebnisses zu einem gewissen Prozentsatz vermittelt, wobei 0 ≤ β ≤ 1, wobei α + β = 1, wobei 1 das am besten qualifizierte Ergebnis (100 %) repräsentiert.

5. Verfahren nach einem der vorhergehenden Ansprüche, das ferner das Herunterladen (B2) einer Anwendung zum Erfassen eines Tastenanschlagmusters (35) aus dem Sammelmodul (3) für biometrische Daten umfasst, wobei jedes Mal, wenn detektiert wird, dass der Benutzer am Benutzerendgerät (1) auf der Tastatur des Benutzerendgeräts (1) schreibt, ein Tastenanschlagmuster extrahiert und an das Verwaltungsmodul (4) gesendet wird, wobei das Verfahren ferner das Vergleichen des extrahierten Tastenanschlagmusters mit einem Referenztastenanschlagmuster, das dem registrierten Benutzer entspricht, umfasst.

6. Verfahren nach Anspruch 5, wobei, wenn das Ergebnis des Prüfens bestimmt, dass das Tastenanschlagmuster nicht dem Referenztastenanschlagmuster entspricht, zum Wiederholen der Verifizierungsschritte mit der Webcam des Benutzerendgeräts (1) ein neues Foto des Benutzers am Benutzerendgerät (1) erfasst und an das Verwaltungsmodul (4) gesendet wird.

7. Verfahren nach einem der Ansprüche 5-6, wobei der Vergleich des Satzes oder der Sätze von Merkmalen, die aus einem Foto extrahiert werden, mit einem biometrischen Modell eines Referenzfotos des Benutzers ein Ergebnis bereitstellt, das eine Variable α ist, deren Wert Informationen zum Qualifizieren des Ergebnisses zu einem gewissen Prozentsatz vermittelt, wobei 0 ≤ α ≤ 1, der Vergleich der Sprachmerkmale, die aus der aufgezeichneten Sprache extrahiert werden, mit einem Referenzsprachmodell, das aus einer Referenzaudiodatei des Benutzers erhalten wird, ein Ergebnis bereitstellt, das eine Variable β ist, deren Wert Informationen zum Qualifizieren des Ergebnisses zu einem gewissen Prozentsatz vermittelt, wobei 0 ≤ β ≤ 1, und der Vergleich des extrahierten Tastenanschlagmusters mit einem Referenztastenanschlagmuster ein Ergebnis bereitstellt, das eine Variable p ist, deren Wert Informationen zum Qualifizieren des Ergebnisses zu einem gewissen Prozentsatz vermittelt, wobei 0 ≤ p ≤ 1, und wobei α + β + ρ = 1, wobei 1 das am besten qualifizierte Ergebnis (100 %) repräsentiert.

8. Verfahren nach einem der vorhergehenden Ansprüche, wobei die eine oder die mehreren Anwendungen (33-35), die am Benutzerendgerät (1) vom Authentifizierungsmodul (3) heruntergeladen werden, portable Anwendungen sind, die am Benutzerendgerät (1) ausgeführt werden, ohne darauf installiert zu sein.

9. Verfahren nach einem der vorhergehenden Ansprüche, wobei, wenn ein Foto oder ein Audioclip zur manuellen Validierung einem manuellen Erkennungsmodul (7) zugeführt (G1) wird, ein menschlicher Validierer an einem entfernten Endgerät (9) auf das manuelle Erkennungsmodul (7) zugreift.

10. Verfahren nach einem der vorhergehenden Ansprüche, wobei, wenn der Benutzer noch nicht als ein Benutzer des Onlinedienstes (2) registriert wurde, vor dem Herunterladen von mindestens einer Anwendung zum Aufnehmen von Fotos (33) vom Sammelmodul (3) für biometrische Daten:
Herunterladen einer Anwendung (31) zur Registrierung in einer biometrisch gesteuerten Sitzung vom Sammelmodul (3) für biometrische Daten zum Benutzerendgerät (1), wobei die Anwendung (31) die Erfassung von mindestens einem ersten Foto mit der Webcam des Benutzerendgeräts (1), das Aufzeichnen einer Audiodatei mit der Sprache des Benutzers und wahlweise die Extraktion eines Tastenanschlagmusters des Benutzers, der auf der Tastatur des Benutzerendgeräts (1) schreibt, verwaltet; und
Speichern (E3) des mindestens einen ersten Fotos, der Audiodatei und wahlweise das Tastenanschlagmusters.

11. System zum Verifizieren der Identität eines Benutzers eines Onlinedienstes, das Folgendes umfasst:
ein Sammelmodul (3) für biometrische Daten, das zum Ausstatten eines Benutzerendgeräts (1), über das ein Benutzer mit einem Onlinedienst (2) verbunden werden kann, mit mindestens einer Anwendung zum Aufnehmen von Fotos (33) mit der Webcam des Benutzerendgeräts (1) ausgelegt ist,
wobei das System **dadurch gekennzeichnet ist, dass** das Sammelmodul (3) für biometrische Daten ferner zum Ausstatten des Benutzerendgeräts (1), über das der Benutzer mit dem Onlinedienst (2) verbunden werden kann, mit mindestens einer Anwendung zum Erfassen von Audio (34) mit dem Mikrofon des Benutzerendgeräts (1), jedes Mal, wenn vom Mikrofon des Benutzerendgeräts (1) Geräusche detektiert werden, und zum Aufzeichnen der Geräusche als Audioclip ausgelegt ist;
wobei das System ferner Folgendes umfasst:
ein Verwaltungsmodul (4), das zum Empfangen von Fotos und zugehörigen Metadaten, die auf Anforderung der Anwendung zum Aufnehmen von Fotos (33) mit der Webcam aufgenommen werden, und zum Empfangen von Audioclips, die auf Anforderung der Anwendung zum Erfassen von Audio (34) aufgezeichnet werden, ausgelegt ist, wobei die Metadaten eine Benutzer-ID des Benutzers des Benutzerendgeräts (1) umfassen;
eine Datenbank (5) zum Speichern der Fotos, der Audioclips und der zugehörigen Metadaten und mindestens eines Referenzfotos und einer Referenzaudiodatei des registrierten Benutzers des Onlinedienstes (2);
ein automatisches Gesichtserkennungsmodul (6a), dass zum Extrahieren eines Satzes von Merkmalen jedes Gesichts, das in den Fotos erscheint, und zum Vergleichen des Satzes oder der Sätze von Merkmalen mit einem biometrischen Referenzmodell, das aus dem Referenzfoto des Benutzers extrahiert wird, dem die Benutzer-ID gehört, ausgelegt ist;
ein automatisches Spracherkennungsmodul (6b), das zum Analysieren, ob der Audioclip, der mit dem Mikrofon des Benutzerendgeräts (1) erfasst wurde, Sprache ist, und, wenn bestimmt wird, dass er Sprache ist, zum Extrahieren von Sprachmerkmalen aus dem Audioclip und Vergleichen derselben mit einem Referenzsprachmodell, das aus einer Referenzaudiodatei des Benutzers erhalten wird, ausgelegt ist;
ein manuelles Validierungsmodul (7) zum Validieren von Fotos und Audioclips für den Fall, dass der automatische Vergleich nicht in der Lage ist, die Person auf dem Foto oder im Audioclip eindeutig einer autorisierten Person zuzuordnen.

12. System nach Anspruch 11, wobei das Sammelmodul (3) für biometrische Daten ferner zum Bereitstellen einer Anwendung zum Extrahieren von Tastenanschlagmustern (35) ausgelegt ist, wobei das System ferner ein automatisches Tastenanschlagmustererkennungsmodul (6c) zum Vergleichen des extrahierten Tastenanschlagmusters mit einem Referenztastenanschlagmuster des registrierten Benutzers umfasst.

13. System nach einem der Ansprüche 11-12, wobei sich das Sammelmodul (3) für biometrische Daten, das Verwaltungsmodul (4), die Datenbank (5), das automatische Gesichtserkennungsmodul (6a), das automatische Spracherkennungsmodul (6b) und das manuelle Erkennungsmodul (7) in der Cloud befinden.

14. System nach einem der Ansprüche 11-13, wobei, wenn das Ergebnis des Vergleichs die Person auf dem Foto oder im Audioclip dem Benutzer, dem die Benutzer-ID gehört, eindeutig zuordnet, das Verwaltungsmodul (4) ferner zum Hinzufügen eines Markers, der anzeigt, dass eine manuelle Validierung nicht erforderlich ist, zum Ergebnis und, wenn das Ergebnis des Vergleichs die Person auf dem Foto oder im Audioclip dem Benutzer, dem die Benutzer-ID gehört, nicht eindeutig zuordnet, zum Hinzufügen eines Markers, der anzeigt, dass eine manuelle Validierung erforderlich ist, zum Ergebnis ausgelegt ist.

15. Computerprogrammprodukt, das Computerprogrammanweisungen/-code oder einen computerlesbaren Speicher bzw. ein computerlesbares Medium, in dem Programmanweisungen/-code zum Durchführen des Verfahrens gemäß einem der Ansprüche 1-10 gespeichert sind, umfasst.

## Revendications

1. Procédé de vérification de l'identité d'un utilisateur d'un service en ligne, comprenant:
l'établissement d'une connexion (B1) entre le terminal utilisateur (1) et un module de collecte de données biométriques (3) lorsqu'un utilisateur est connecté (A1) à un service en ligne (2) à partir d'un terminal utilisateur (1) comprenant une webcam et un microphone ;
le téléchargement (B2) depuis le module de collecte de données biométriques (3) d'au moins une application de prise de photos (33) avec la webcam du terminal utilisateur (1) ;
le procédé étant **caractérisé en ce qu'**il comprend en outre :
le téléchargement (B2) depuis le module de collecte de données biométriques (3) d'au moins une application de capture audio (34) avec le microphone du terminal utilisateur (1) ;
pendant qu'une session avec le service en ligne (2) est active :
la prise d'une photo avec la webcam du terminal utilisateur (1), ladite prise de photo étant commandée par l'application de prise de photos (33) ;
l'envoi (D2) de la photo prise et des métadonnées associées à un module de gestion (4), lesdites métadonnées étant au moins un identifiant d'utilisateur de l'utilisateur utilisant le terminal utilisateur (1) et l'heure de capture de ladite photo ;
l'extraction automatique d'un ensemble d'éléments pour chaque visage qui apparaît sur ladite photo ;
la comparaison dudit ensemble ou desdits ensembles de caractéristiques extraites de ladite photo avec un modèle biométrique d'une photo de référence de l'utilisateur ;
la répétition des étapes précédentes à des intervalles de temps périodiques ou non périodiques, vérifiant ainsi en continu l'identité de l'utilisateur connecté au service en ligne (2) par l'intermédiaire du terminal d'utilisateur (1) ;
chaque fois qu'un son est détecté par le microphone du terminal d'utilisateur (1), l'enregistrement du son sous la forme d'un clip audio, l'envoi de celui-ci au module de gestion (4), la vérification si ledit son est une voix ou non, et s'il s'agit d'une voix : l'extraction de celui-ci de caractéristiques vocales et la comparaison de celles-ci à un modèle vocal de référence obtenu à partir d'un fichier audio de référence de l'utilisateur,
si le résultat de l'une des deux comparaisons ne permet pas de faire correspondre sans équivoque la personne sur la photo et/ou le clip audio avec l'utilisateur auquel appartient ledit identifiant d'utilisateur, soit en informer le fournisseur du service en ligne (2), soit envoyer (G1) la photo et/ou le clip audio à une unité de reconnaissance manuelle (7) pour une validation manuelle.

2. Procédé selon la revendication 1, dans lequel les étapes répétées de prises de photos, d'envoi de celles-ci au module de gestion (4) et de comparaison des caractéristiques extraites avec un modèle biométrique d'une photo de référence de l'utilisateur, sont effectuées à des intervalles de temps aléatoires.

3. Procédé selon l'une quelconque des revendications précédentes, comprenant en outre, si le son détecté est une voix, la prise automatique d'une autre photo avec la webcam du terminal utilisateur (1), l'envoi (D2) de celle-ci au module de gestion (4), l'extraction d'un ensemble de caractéristiques pour chaque visage qui apparaît sur la photo et la comparaison de l'ensemble ou des ensembles de caractéristiques extraites de ladite photo avec un modèle biométrique d'une photo de référence de l'utilisateur.

4. Procédé selon l'une quelconque des revendications précédentes, dans lequel la comparaison de l'ensemble ou des ensembles de caractéristiques extraites d'une photo avec un modèle biométrique d'une photo de référence de l'utilisateur fournit un résultat qui est une variable α dont la valeur donne des informations pour qualifier le résultat selon un certain pourcentage, où 0≤α≤1, et la comparaison des caractéristiques vocales extraites de la voix enregistrée avec un modèle vocal de référence obtenu à partir d'un fichier audio de référence de l'utilisateur fournit un résultat qui est une variable β dont la valeur donne des informations pour qualifier le résultat selon un certain pourcentage, où 0 ≤ β ≤ 1, où α + β = 1, où 1 représente le résultat le mieux qualifié (100 %).

5. Procédé selon l'une quelconque des revendications précédentes, comprenant en outre le téléchargement (B2) depuis le module de collecte de données biométriques (3) d'une application pour capturer un modèle de frappe (35) et, chaque fois qu'il est détecté que l'utilisateur sur le terminal utilisateur (1) tape sur le clavier du terminal utilisateur (1), un modèle de frappe est extrait et envoyé au module de gestion (4), le procédé comprenant en outre la comparaison du modèle de frappe extrait avec un modèle de frappe de référence correspondant à l'utilisateur enregistré.

6. Procédé selon la revendication 5, dans lequel si le résultat de la vérification détermine que le modèle de frappe ne correspond pas au modèle de frappe de référence, une nouvelle photo de l'utilisateur au terminal utilisateur (1) est capturée avec la webcam du terminal utilisateur (1) et envoyée au module de gestion (4) pour répéter les étapes de vérification.

7. Procédé selon l'une quelconque des revendications 5 à 6, dans lequel la comparaison de l'ensemble ou des ensembles de caractéristiques extraites d'une photo avec un modèle biométrique d'une photo de référence de l'utilisateur fournit un résultat qui est une variable α dont la valeur donne des informations pour qualifier le résultat selon un certain pourcentage, où 0 ≤ α ≤ 1, la comparaison des caractéristiques vocales extraites de la voix enregistrée avec un modèle vocal de référence obtenu à partir d'un fichier audio de référence de l'utilisateur fournit un résultat qui est une variable β dont la valeur donne des informations pour qualifier le résultat selon un certain pourcentage, où 0 ≤ β ≤ 1, et la comparaison du modèle de frappe extrait avec un modèle de frappe de référence fournit un résultat qui est une variable p dont la valeur donne des informations pour qualifier le résultat selon un certain pourcentage, où 0 ≤ ρ ≤ 1, et où α + β + p = 1, où 1 représente le résultat le mieux qualifié (100 %).

8. Procédé selon l'un quelconque des revendications précédentes, dans lequel ladite une ou les applications (33-35) téléchargées sur le terminal utilisateur (1) par le module d'authentification (3) sont des applications portables exécutées sur le terminal utilisateur (1) sans être installées dessus.

9. Procédé selon l'un quelconque des revendications précédentes, dans lequel, si une photo ou un clip audio est amené (G1) à un module de reconnaissance manuelle (7) pour une validation manuelle, un validateur humain accède au module de reconnaissance manuelle (7) depuis un terminal distant (9).

10. Procédé selon l'un quelconque des revendications précédentes, dans lequel si l'utilisateur n'a pas encore été enregistré en tant qu'utilisateur du service en ligne (2), avant de télécharger depuis le module de collecte de données biométriques (3) au moins une application pour prendre des photos (33) :
télécharger depuis le module de collecte de données biométriques (3) vers le terminal utilisateur (1) une application (31) pour l'enregistrement à une session contrôlée par biométrie, ladite application (31) gérant la capture d'au moins une première photo avec la webcam du terminal utilisateur (1), l'enregistrement d'un fichier audio avec la voix de l'utilisateur et de façon optionnelle l'extraction d'un modèle de frappe de l'utilisateur tapant sur le clavier du terminal utilisateur (1) ; et
stocker (E3) ladite au moins une première photo, le fichier audio et de façon optionnelle le modèle de frappe.

11. Système de vérification de l'identité d'un utilisateur d'un service en ligne, comprenant :
un module de collecte de données biométriques (3) configuré pour fournir à un terminal d'utilisateur (1) par lequel un utilisateur peut être connecté à un service en ligne (2), au moins une application pour prendre des photos (33) avec la webcam du terminal d'utilisateur (1)
le système étant **caractérisé en ce que** le module de collecte de données biométriques (3) est en outre configuré pour fournir au terminal d'utilisateur (1) par lequel l'utilisateur peut être connecté au service en ligne (2), au moins une application de capture audio (34) avec le microphone du terminal utilisateur (1) chaque fois qu'un son est détecté par le microphone du terminal utilisateur (1) et pour enregistrer le son comme un clip audio ;
le système comprenant en outre :
un module de gestion (4) configuré pour recevoir des photos et des métadonnées associées prises avec ladite webcam à la demande de l'application pour prendre des photos (33), et pour recevoir des clips audio enregistrés à la demande de l'application de capture audio (34), lesdites métadonnées comprenant un identifiant d'utilisateur de l'utilisateur du terminal utilisateur (1) ;
une base de données (5) pour stocker les photos, clips audio et métadonnées associées, et au moins une photo de référence et un fichier audio de référence de l'utilisateur enregistré dudit service en ligne (2) ;
un module de reconnaissance faciale automatique (6a) configuré pour extraire un ensemble de caractéristiques pour chaque visage qui apparaît dans les photos et pour comparer ledit ensemble ou lesdits ensembles de caractéristiques avec un modèle biométrique de référence extrait de la photo de référence de l'utilisateur auquel appartient l'identifiant d'utilisateur ;
un module de reconnaissance vocale automatique (6b) configuré pour analyser si le clip audio capturé avec le microphone du terminal utilisateur (1) est une voix et, s'il est déterminé que c'est une voix, pour extraire des caractéristiques vocales du clip audio et pour les comparer avec un modèle vocal de référence obtenu à partir d'un fichier audio de référence de l'utilisateur ;
un module de validation manuelle (7) pour valider des photos et des clips audio dans le cas où la comparaison automatique n'est pas capable de faire correspondre sans équivoque la personne dans la photo ou le clip audio avec une personne autorisée.

12. Système selon la revendication 11, dans lequel le module de collecte de données biométriques (3) est en outre configuré pour fournir une application pour extraire un modèle de frappe (35), le système comprenant en outre un module de reconnaissance automatique de modèle de frappe (6c) pour comparer le modèle de frappe extrait avec un modèle de frappe de référence de l'utilisateur enregistré.

13. Système selon l'une quelconque des revendications 11-12, dans lequel le module de collecte de données biométriques (3), le module de gestion (4), la base de données (5), le module de reconnaissance faciale automatique (6a), le module de reconnaissance vocale automatique (6b) et le module de reconnaissance manuelle (7) sont dans le nuage.

14. Système selon l'une quelconque des revendications 11-13, dans lequel le module de gestion (4) est également configuré pour, si le résultat de ladite comparaison fait correspondre sans équivoque la personne dans la photo ou le clip audio avec l'utilisateur auquel appartient ledit identifiant d'utilisateur, ajouter au résultat un drapeau indiquant qu'aucune validation manuelle n'est nécessaire, et si le résultat de ladite comparaison ne fait pas correspondre sans équivoque la personne dans la photo ou le clip audio avec l'utilisateur auquel appartient ledit identifiant d'utilisateur, pour ajouter au résultat un drapeau indiquant qu'une validation manuelle est nécessaire.

15. Produit de programme informatique comprenant des instructions/code de programme informatique ou une mémoire/moyen lisible par ordinateur qui stocke des instructions/code de programme, pour exécuter le procédé selon l'une quelconque des revendications 1-10.
